# NOUVEAU FASCICULE DE BREVET EUROPEEN

(11) **EP 0 325 505 B2**
(45) Date de publication et mention de la décision concernant l'opposition: **31.05.1995**
(45) Mention de la délivrance du brevet: 19.02.1992
(21) Numéro de dépôt: 89400069.4
(22) Date de dépôt: 10.01.1989
(51) Int. Cl.: G01M 1/10, G01M 1/02, G01M 1/16, B64C 27/00

(54) **Dispositif pour annuler les forces aérodynamiques sur un corps en rotation et application à l'équilibrage dynamique**
Vorrichtung zum Annullieren der aerodynamischen Kräfte auf Körper in Rotation und dynamische Auswuchtanwendung
Device for cancelling aerodynamical forces on a rotating body and dynamical balance use

(30) Priorité: 12.01.1988 FR 8800269
(43) Date de publication de la demande: 26.07.1989
(73) Titulaire: AEROSPATIALE Société Nationale Industrielle, 75781 Paris Cédex 16 (FR)
(72) Inventeur: Rollet, Robert, F-06550 La Roquette/Siagne (FR)
(74) Mandataire: Poulin, Gérard

(56) Documents cités:
- DE-A- 1 573 598
- DE-B- 1 248 977
- DE-B- 2 241 669
- DE-U- 8 521 803

## Description

La présente invention a pour objet un dispositif conçu pour annuler les forces aérodynamiques s'exerçant sur un corps non symétrique en rotation autour d'un axe fixe avec pour application principale l'équilibrage dynamique des satellites artificiels.

L'équilibrage dynamique d'un corps en rotation autour d'un axe consiste à modifier la répartition des masses dans ce corps afin, soit d'annuler les efforts alternatifs sur les paliers de l'axe si celui-ci est matérialisé (Moteur électrique, gyroscope, turbine), soit de rendre sa rotation libre, stable autour de cet axe (toupie, satellite).

Cette modification de la répartition des masses se fait par retrait de matière (moteur électrique, gyroscope) ou ajout de masses d'équilibrage (satellite).

Un corps est stable en rotation autour de ses axes d'inertie principaux extremum. L'équilibrage dynamique a pour objectif d'amener en concordance un axe donné du corps et un des axes principaux d'inertie. L'équilibrage dynamique a pour corollaire obligé l'équilibrage statique.

La caractérisation d'un corps en rotation autour d'un axe est effectuée au moyen d'une machine à équilibrer composée d'un arbre tournant lié d'une part rigidement au corps à caractériser et, d'autre part, au moyen de capteurs de force à une structure infiniment rigide et stable. Les informations issues de ces capteurs de force permettent de mesurer les forces générées par le corps en rotation autour d'un axe obligé. Ces valeurs d'efforts associées aux paramétres de vitesse angulaire et géométrique du corps permettent de localiser et de quantifier les masses à enlever ou à ajouter au corps pour l'équilibrer, c'est-à-dire annuler les efforts mesurés par la machine à équilibrer.

Les efforts engendrés par un corps en rotation étant proportionnels au carré de la vitesse de rotation, les mesures doivent être effectuées à la vitesse maximale compatible avec la rigidité et la tenue mécanique du corps en rotation.

L'équilibrage dynamique des satellites est une activité spécifique caractérisée par l'utilisation d'une machine à équilibrer à axe vertical, une vitesse de rotation faible (30 à 60 tours/min) et une précision de mesure importante.

Les satellites actuels se caractérisent par une forme extérieure comportant de nombreuses excroissances (antennes, réflecteurs, sources) engendrant en rotation des forces aérodynamiques importantes prises en compte par la machine à équilibrer comme des masses fictives faussant les mesures et interdisant, de ce fait, un équilibrage correct de ces satellites.

La méthode habituelle pour résoudre ce problème consiste à effectuer les mesures dans le vide, ce qui nécessite une cloche étanche entourant l'ensemble machine à équilibrer et satellite, et l'installation de pompage associée.

La présente invention qui offre une solution à ce problème, permet d'effectuer l'équilibrage dynamique des satellites non symétriques par mise en rotation synchrone de l'air au moyen d'une enceinte à symétrie axiale d'axe confondu avec l'axe de rotation du satellite et tournant en synchronisme avec lui.

Le dispositif faisant l'objet de la présente invention comprend donc essentiellement une cloche entourant le corps en rotation, la cloche tournant concentriquement à l'axe fixe autour duquel le corps tourne, conformément à la revendication 1. La revendication 6 concerne un procédé correspondant. DE-A-85 21 803 décrit un appareil d'équilibrage d'aiguilles d'appareils, muni d'un disque creusé d'un logement de réception de l'aiguille pour l'abriter des effets de l'air ambiant, dans lequel l'aiguille est posée ou fixée au fond du logement.

La cloche peut consister en une structure de révolution liée à un cadre circulaire mobile reposant sur un cadre circulaire fixe par l'intermédiaire d'éléments roulants.

Un dispositif permet d'entraîner en rotation ce cadre mobile en synchronisme avec l'axe de la machine à équilibrer. La synchronisation peut être électrique par moteur asservi ou mécanique par liaison avec le moteur de la machine à équilibrer.

La cloche est munie, à sa périphérie interne, d'ailettes radiales qui entraînent l'air de l'enceinte que la cloche délimite.

La description qui va suivre en regard des dessins annexés, donnés à titre d'exemple non limitatif, fera bien comprendre comment l'invention peut être réalisée. La figure 1 représente une vue générale de l'invention et tes figures 2 et 3 représentent deux détails correspondant à deux réalisations distinctes.

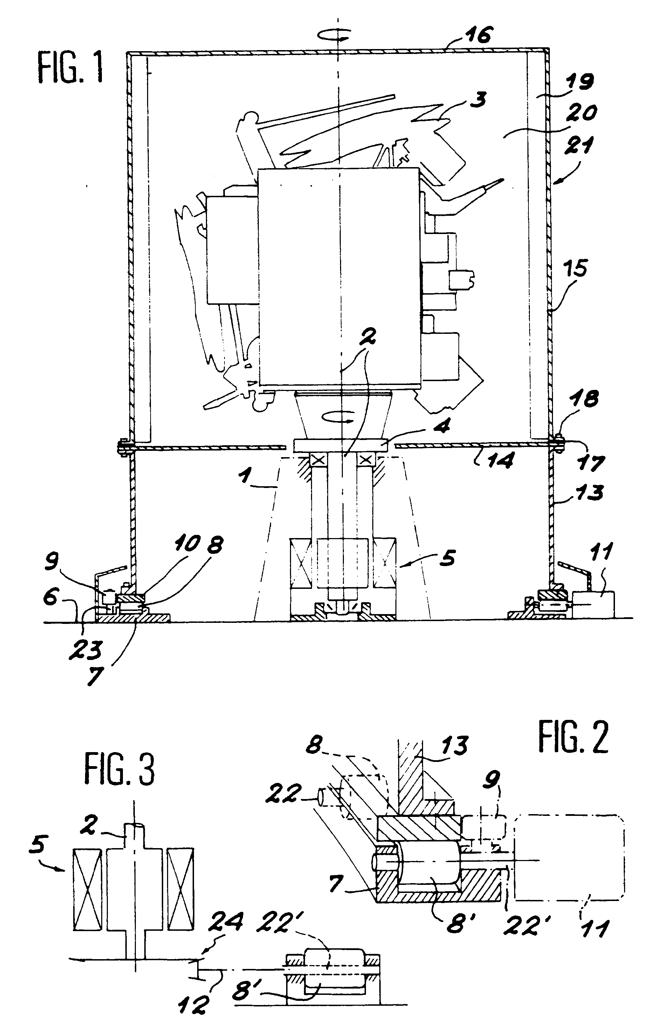

Sur la figure 1, on note en 1 une machine à équilibrer à axe de rotation vertical 2 entraîné par un moteur électrique 5 et un corps à équilibrer 3 fixé sur le plateau 4. La machine à équilibrer 1 est liée rigidement au sol 6. Un cadre circulaire 7 lié rigidement au sol 6 concentriquement à l'axe 2 porte une série de galets 8 d'axes 22 horizontaux et radiaux et une série de galets 9 d'axes 23 verticaux destinés à maintenir un cadre mobile 10 horizontal et concentrique à l'axe 2. Le cadre mobile 10 est entraîné en rotation au moyen d'un moteur électrique asservi 11 qui entraîne au moins un galet horizontal moteur 8' dont l'axe 22' correspond à l'arbre de sortie du moteur 11. Les autres galets horizontaux 8 sont des galets porteurs du cadre mobile 10. On peut également envisager, en alternative, de supprimer le moteur 11 et d'entraîner le cadre mobile 10 à l'aide d'une barre horizontale 12 reliée au moteur 5 de la machine à équilibrer 1 et à l'axe vertical 2 par un renvoi d'angle à pignons coniques 24 sous le moteur 5. La barre 12 est alors couplée à l'axe 22' du galet moteur 8'. Les figures 2 et 3 représentent mieux ces deux solutions.

Au cadre 10 est lié rigidement un cylindre 13 portant au niveau du plateau 4 un disque 14 laissant, entre son trou central et le bord du plateau 4, le jeu minimum compatible avec le bon fonctionnement de l'ensemble.

Sur le disque 14 repose, avec interposition d'un joint d'étanchéité 17, un cylindre supérieur 15 axé sur 2 et obturé à sa partie supérieure par un disque 16. La liaison mécanique entre les cylindres 13, 15 et le disque 14 est effectuée au moyen d'une série de boulons 18.

Le cylindre 15 comporte sur sa périphérie interne une série d'ailettes 19 disposées verticalement et radialement destinées à entraîner l'air contenu dans l'enceinte 20 délimitée par tes pièces 14, 15 et 16 et contenant le satellite 3.

La mise en rotation simultanée et en synchronisme du satellite 3 et de l'ensemble de la cloche 21 essentiellement constituée par le cylindre supérieur 15, le disque 14 et le disque 16, aboutit à la mise en rotation de l'ensemble de l'air contenu dans l'enceinte 20, donc à l'annulation de la vitesse relative entre le satellite et l'air ambiant et des forces aérodynamiques correspondantes.

## Revendications

1. Dispositif conçu pour annuler des forces aérodynamiques s'exerçant sur un corps (3) en rotation autour d'un axe fixe (2) sous l'action d'un dispositif moteur (5) rigidement lié à un sol (6), comprenant une cloche (21) entourant le corps en rotation, la cloche tournant concentriquement à l'axe fixe et sur un support (7) rigidement lié au sol (6), caractérisé en ce que la cloche est séparée du corps en rotation de façon à ne pas lui transmettre de forces d'inertie, et en ce qu'elle comporte des ailettes radiales internes.

2. Dispositif selon la revendication 1, caractérisé en ce que la cloche est une structure de révolution liée à un cadre circulaire mobile (10) reposant sur un cadre circulaire fixe (7) constituant le support par l'intermédiaire d'éléments roulants (8).

3. Dispositif selon l'une quelconque des revendications 1 ou 2, caractérisé en ce que la cloche est mue par un second moteur (11) à une vitesse angulaire proche de la vitesse de rotation de l'objet (3).

4. Dispositif selon l'une quelconque des revendications 1 ou 2, caractérisé en ce que la cloche et l'objet sont mus en rotation par un moteur unique (5) par l'intermédiaire de deux liaisons mécaniques (2, 12).

5. Procédé d'équilibrage dynamique d'un corps en rotation autour d'un axe fixe sous l'action d'un dispositif moteur rigidement lié à un sol, dans lequel une cloche tournant concentriquement à l'axe fixe et sur un support rigidement lié au sol entoure le corps, caractérisé en ce que la cloche est séparée du corps en rotation de façon à ne pas lui transmettre de forces d'inertie et en ce qu'elle comporte des ailettes radiales internes.

6. Procédé d'équilibrage dynamique selon la revendication 5, dans lequel le corps est un satellite artificiel.

## Claims

1. Device designed for cancelling out aerodynamic forces exerted on an object (3) in rotation about a fixed axis (2) under the action of a motor means (5) rigidly connected to the ground (6), incorporating a chamber (21) surrounding the rotating object, the chamber rotating concentrically to the fixed axis and on a support (7) rigidly connected to the ground (6), characterized in that the chamber is separated from the rotating object in such a way as to not transmit thereto forces of inertia and in that it has radially inner ribs.

2. Device according to claim 1, characterized in that the chamber is a structure of revolution connected to a circular, mobile frame (10) resting on a circular, fixed frame (7) constituting the support by means of rolling elements (8).

3. Device according to either of the claims 1 and 2, characterized in that the chamber is moved by a second motor (11) at an angular velocity close to the rotation speed of the object (3).

4. Device according to either of the claims 1 and 2, characterized in that the chamber and the object are rotated by a single motor (5) by means of two mechanical links (2, 12).

5. Process for the dynamic balancing of a rotating object about a fixed axis under the action of a motor means rigidly connected to the ground, in which a chamber rotating concentrically to the fixed axis and on a support rigidly connected to the ground surrounds the object, characterized in that the chamber is separated from the rotating object so as not to transmit thereto forces of inertia and in that it has radial, inner ribs.

6. Process for dynamic balancing according to claim 5, wherein the object is an artificial satellite.

## Patentansprüche

1. Vorrichtung zum Annulieren der aerodynamischen Kräfte, die auf einen Körper (3) wirken, der um eine feste Achse (2) rotiert unter der Wirkung einer Antriebsvorrichtung (5), starr verbunden mit einem Boden (6), umfassend eine Glocke (21), die den rotierenden Körper umgibt, wobei die Glocke konzentrisch zur festen Achse und auf einem starr mit dem Boden verbundenen Träger (7) dreht,
**dadurch gekennzeichnet,** daß die Glocke von dem rotierenden Körper so getrennt ist, daß sie keine Trägheitskräfte auf ihn überträgt, und dadurch, daß sie Innen-Radialflügel umfaßt.

2. Vorrichtung nach Anspruch 1, dadurch gekennzeichnet, daß die Glocke ein drehsymetrischer Körper ist, der mit einem kreisförmigen, beweglichen Rahmen (10) verbunden ist, der auf einem kreisförmigen festen Rahmen (7) abgestützt ist, der über Rollelemente (8) den Träger bildet.

3. Vorrichtung nach einem der Ansprüche 1 oder 2, dadurch gekennzeichnet, daß die Glocke durch einen zweiten Motor (11) in eine Winkelgeschwindigkeit nahe der Drehgeschwindigkeit des Gegenstandes (3) versetzt wird.

4. Vorrichtung nach einem der Ansprüche 1 oder 2, dadurch gekennzeichnet, daß die Glocke und der Gegenstand durch einen einzigen Motor (5) über zwei mechanische Verbindungen (2, 12) in Drehung versetzt werden.

5. Verfahren zum dynamischen Auswuchten eines unter der Wirkung einer starr mit einem Boden verbundenen Antriebseinrichtung eines um eine feste Achse rotierenden Körpers, bei dem eine Glocke den Körper umgibt, die sich konzentrisch zur festen Achse und auf einem starr mit dem Boden verbundenen Träger dreht.

6. Verfahren zum dynamischen Auswuchten nach Anspruch 5, bei dem der Körper ein künstlicher Satellit ist.
